# EUROPEAN PATENT SPECIFICATION

(11) **EP 3 150 294 B1**
(45) Date of publication and mention of the grant of the patent: **14.03.2018**
(21) Application number: 16275122.6
(22) Date of filing: 01.09.2016
(51) Int. Cl.: B21D 1/05, B21B 1/22

(54) **CUT-TO-LENGTH STEEL COIL PROCESSING LINE WITH STRETCHER LEVELER AND TEMPER MILL AND METHOD**
ANLAGE ZUM ABLÄNGEN EINER STAHLSPULE MIT STRECKBIEGERICHTANLAGE UND DRESSIERGERÜST SOWIE VERFAHREN
LIGNE DE DÉCOUPE À LONGUEUR D'ACIER EN BOBINES AVEC BANC D'ÉTIRAGE ET DE PLANAGE ET TRAIN D'ÉCROUISSAGE ET PROCÉDÉ

(30) Priority: 02.10.2015 US 201514873539
(43) Date of publication of application: 05.04.2017
(73) Proprietor: The Material Works, Ltd., Red Bud, IL 62278 (US)
(72) Inventor: Voges, Kevin C, Red Bud, IL 62278 (US)
(74) Representative: Tomkinson, Alexandra

(56) References cited:
- EP-A1- 0 824 046
- US-A- 3 292 402
- US-A- 4 751 838
- US-B1- 6 205 830

## Description

### BACKGROUND AND SUMMARY

The present invention relates to a method for processing steel coils in a cut-to-length and/or blanking line. The cut-to-length and/or blanking line will uncoil the sheet material, level it, and then cut it to the required length and stack it. The end product produced by a cut-to-length and/or blanking line is a flat sheet of material cut to a precise length tolerance. The invention also relates to a cut-to-length steel processing line for carrying out the method according to the invention.

As described in more detail below, in a cut-to-length and/or blanking line to level the coiled material, a stretcher leveler may be used or a temper mill may be used. Hot roll processing lines used to produce flat, stress-free sheets generally are two types, a stretcher leveler line or a temper mill line. The general description of a stretcher leveler is described in U.S. Pat. No. 4,751,838. The stretcher leveler stretches the material sufficiently to exceed the yield point in all the fibers of the strip from top to bottom and from edge to edge thus equalizing internal trapped stresses throughout the material. A stretcher leveler completes its work with usually only .3 to .5% elongation. The general description of a temper mill is described in U.S. Pat. No. 3,292,402. A temper mill eliminates randomly trapped internal stresses by elongating the material beyond its yield point by squeezing the material between two rolls with enough force to reduce its thickness. The typical amount of elongation in a temper mill is about 1 or 2%.

As described in more detail, the invention is directed to a method for processing steel coils as defined in claim 1 and to a processing line with both a temper mill and a stretcher leveler as defined in claim 6. The temper mill may be placed on-line and the stretcher leveler bypassed to process thin gauge materials. Vice versa, the temper mill may be bypassed and the stretcher leveler may be placed on-line to process thicker gauge material.

According to the invention, a small temper mill is integrated into a cut-to-length line having a stretcher leveler. The temper mill may be a 4 high or 2 high mill temper mill capable of handling coils having a gauge thickness of between 1.52 mm (16 gauge, 0.0598 inches) and 3.79 mm (9 gauge, 0.1495 inches). The temper mill may be configured to generate 75 kpsi maximum rolling stress and 2.5% elongation. The temper mill may be used to produce an improved surface finish and where there is concern for coil breaks. The temper mill may also provide increased production when compared to operations involved a stretcher leveler especially for thinner gauges between 1.52 mm (16 gauge, 0.0598 inches) and 3.79 mm (9 gauge, 0.1495 inches).

The stretcher leveler may be used for coils and/or sheets having a thickness of between 1.52 mm (16 gauge) and 19 mm (3/4 inches). For the thicker sizes between 3.79 mm (9 gauge) and 19 mm (3/4 inches), the slower speed of the stretcher leveler is not as critical since there is generally less warp in a thicker gauge coil. The stretcher leveler may also be used for thin gauge thickness coils, i.e. between 1.52 mm (16 gauge) and 3.79 mm (9 gauge), having poor shape and/or where flatness is a concern.

### BRIEF DESCRIPTION OF THE DRAWINGS

Figure 1 illustrates a cut-to-length processing line with detail areas 2-5 corresponding to the drawing figures.
Figure 2 is an enlarged view of detail area 2 of Figure 1 corresponding to generally an uncoiler and guide rollers that direct the uncoiled sheet metal material through the line.
Figure 3 is an enlarged view of detail area 3 of Figure 1 corresponding to generally a temper mill and a roller level.
Figure 4 is an enlarged view of detail area 4 of Figure 1 corresponding to generally a stretcher leveler.
Figure 5 is an enlarged view of detail area 5 of Figure 1 corresponding to generally a sheet stacker.
Figure 6 is an initial process flow showing a method of operating the processing line of Figures 1-5.
Figure 7 is a further process flow showing other methods of operating the processing line of Figures 1-5.

### DETAILED DESCRIPTION

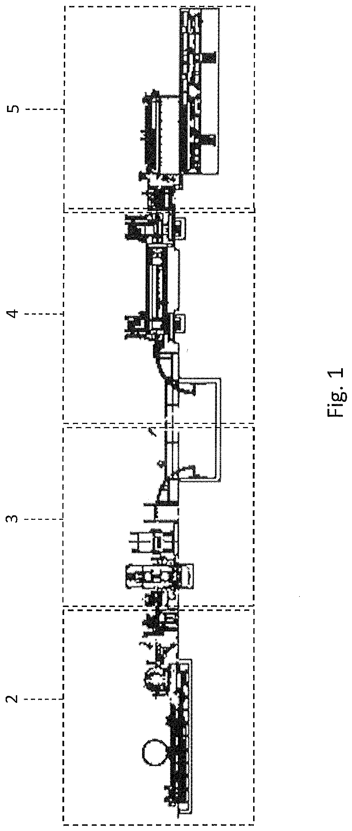

An exemplary cut-to-length and/or blanking line 10 is shown generally in Figures 1-5, and includes a coil 12 of sheet metal mounted on a reel 14, a straightener roller 16, a temper mill 18, roller leveler 20, a pit 22, a stretcher leveler 24, shearer 26, and a stacking apparatus 28.

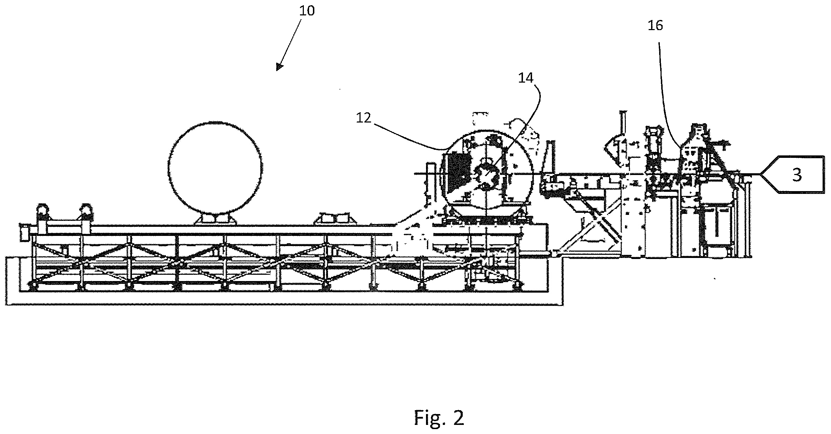

As shown best in Figure 2, the straightener roller 16 is positioned just downstream of the reel 14. The straightener roller 16 includes a plurality of upper rollers and lower rollers having a relatively large diameter. At least some of the rollers are powered to withdraw the sheet metal strip from the coil at a uniform velocity. The upper and lower rollers are positioned relative to one another to put a deep reverse bend in the sheet sufficient to reverse any coil set. The reel 14 and straightener roller 16 are conventional.

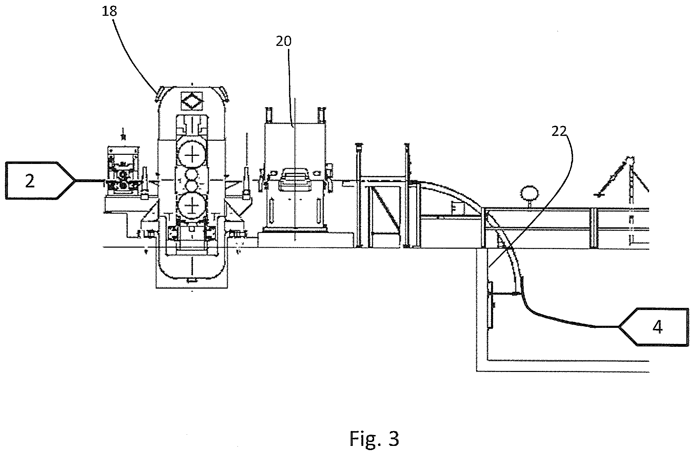

As shown best in Figure 3, after the straightener roller 16, the temper mill 18, and if desired a roller leveler 20, are provided. The temper mill 18 may be a 4 high or 2 high mill temper mill capable of handling sheets having a gauge thickness of between 1.52 mm (16 gauge, 0.0598 inches) and 3.79 mm (9 gauge, 0.1495 inches). The temper mill 18 may be configured to generate 75 kpsi maximum rolling stress and 2.5% elongation. The roller leveler 20 may be provided in conjunction with the temper mill 18 to further enhance the flatness of relatively thin gauges of sheet metal material. Depending upon the application, the roller leveler 20 and the temper mill 18 may be used together to correct the shape of thin gauge sheet metal material. While the temper mill 18 may stress relieve the sheet metal material, the roller leveler 20 may be needed to provide additional flatness for the sheet metal material. The roller leveler 20 may also be necessary to remove defects such as edge wave or center buckle. The roller leveler 20 may be used to bend the sheet metal material progressively up and down over rolls of sufficient diameter to stretch the outer and inner surfaces of the material past the yield point. The roller leveler 20 may also be used to selectively stretch the sheet metal material from side to side. The roller leveler 20 may be used without the temper mill 18 depending upon the condition of the continuous length of sheet metal. The roller leveler is conventional.

As shown in Figure 3, the take up pit 22 is positioned just downstream of the roller leveler 20 and prior to the stretcher leveler 24. The take-up pit 22 may be used primarily in connection with the stretcher leveler 24. As the sheet metal material is advanced incrementally through the stretcher leveler 24 during successive stretching operations, the take up pit 22 allows the strip to accumulate during short periods of time as the portions of the sheet metal strip are advancing incrementally through the stretcher leveler. The take up pit is conventional. The take up pit may not be needed with when operating the temper mill portion of the line in which case the take-up pit can be elevated into a position so that the sheet metal material passes straight through the line without extending into the pit. The elevation mode of the take-up pit also conventional.

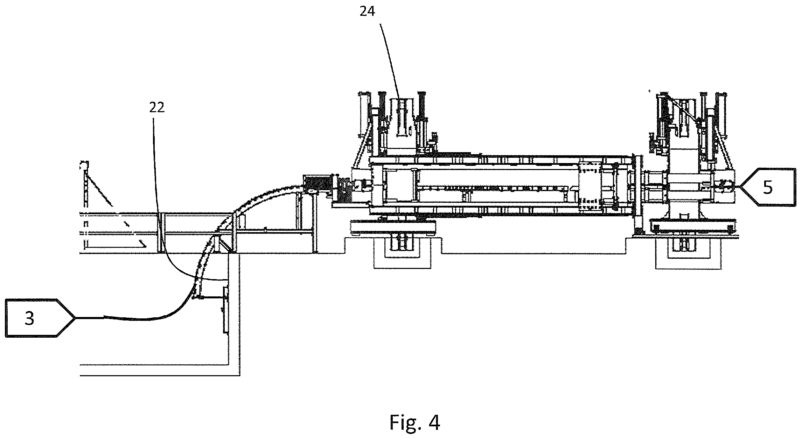

As shown best in Figure 4, after the take up pit 22, the stretcher leveler 24 may be provided. The stretcher leveler 24 may include a plurality of powered rollers for pulling the sheet metal strip through the stretcher leveler. A feeding mechanism of the stretcher 24 leveler may advance the sheet metal strip through the stretcher leveler at precisely measured increments. Between the incremental advances of the strip, the stretcher leveler 24 may clamp down on a segment of the strip that is within the stretcher leveler and stretch the segment beyond its yield point to eliminate internal residual stresses, thereby leveling that segment. After the segment has been stretched, the stretcher leveler 24 may release the strip and advance the strip so that the next segment of strip can be stretched. Preferably, the length of the incremental advances of the strip does not exceed the length of the segment being stretched, so the entire strip can be stretched through the successive stretching operations. Generally speaking, the stretcher leveler consists of a pair of entry and exit frames that are adjustable relative to the desired length of the segment to be stretched. During stretching, each frame grips the segment to be stretched across its width. Large hydraulic cylinders extend between the two frames. When pressurized, the cylinders push the frames away from one another thereby stretching the segment clamped therebetween. The segment is subsequently stretched in the direction of travel. The feed mechanism feeds the sheet metal material through the leveler incrementally. Between feed cycles, while the material is stopped to be sheared to length, a portion of the strip is stretched. The stretcher leveler is conventional.

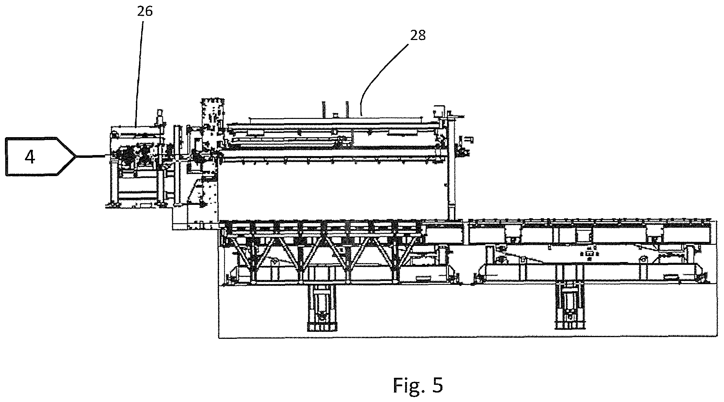

As shown best in Figure 5, the processing line 10 includes a shearer 26 and stacking apparatus 28. The shear may comprise a rotary shearer 26. A rotary shear has proven effective for use with thin gauge materials in a temper mill cut-to-length blanking line where the sheet metal strip is continuously fed through the line. The shearer 26 may also comprise a direct drive mechanical shear. A direct drive mechanical shear has proven effective for use with thicker gauge materials in a stretcher leveler cut-to-length blanking line where the sheet metal strip is incrementally fed through the line. The line may include both types of shearers. The stacking apparatus 28 may be a drop arm stacker and may include a lift table. The rotary shear, direct drive mechanical shear, and stacker are conventional.

A cut-to-length processing line with a stretcher leveler provides some advantages over a cut-to-length processing line having a temper mill. In particular, the stretcher leveler tends to produce flatter, continuous lengths of sheet metal when compared to a temper mill. In a stretcher leveler, the resulting product leveler tends to have no residual stresses and tends to maintain shape over time. Stretcher leveling operations generally have minimal effect on the physical and mechanical properties of the continuous length of sheet metal. A cut-to-length processing line with a stretcher leveler is generally easier to operate than a cut-to-length processing line with a temper mill. A typical stretcher leveler cut-to-length processing line includes a capital investment of approximately $7 million. This tends to be less than a temper mill cut-to-length processing line. The temper mill cut-to-length processing line generally includes a capital investment of approximately $20 million.

On the other hand, a cut-to-length temper mill processing line provides some advantages over a cut-to-length stretcher leveler processing line. Generally speaking, temper mill processed material has an improved surface finish when compared to stretcher leveler processed material, which is usually desired on the thinner gauge i.e., 1.52 mm-3.79 mm (16 gauge-9 gauge) materials. Often, temper mill processing allows for faster throughput time. The temper mill also increases the yield point elongation of material which helps to prevent coil breaks often found in softer and thinner, e.g., 1.52 mm-3.79 mm (16 gauge - 9 gauge) materials. Continuous lengths of sheet metal processed in a stretcher leveler cut-to-length processing line generally does very little to prevent these undesirable coil breaks.

To achieve the advantages of both a traditional stretcher level cut-to-length processing line and a temper mill cut-to-length processing line, a temper mill may be incorporated into a stretcher leveler cut-to-length processing line as shown in Figures 1 through 5, via retrofitting or via new construction. The added cost from incorporating the temper mill to the stretcher leveler cut-to-length processing line involves an additional capital investment of about $5 million, which brings the total cost of such a line to $11 million. This represents a smaller capital investment than is required for a temper mill cut-to-length processing line, especially a temper mill cut-to-length processing line configured to process large gauge thickness sheet metal.

In accordance with a method involving a cut-to-length steel coil processing line, for instance, as shown in Figures 1-5, a thickness of the continuous length of sheet metal may be determined and compared to a selected measurement criteria. The processing line may be configured in one of two configurations based upon the comparison of the determined thickness to the selected measurement criteria. When the comparison indicates that the determined thickness is at or below the selected measurement criteria, the processing line may be configured in a configuration that directs the continuous length of sheet metal from the uncoiling reel through the temper mill to the stacking apparatus without passing through the stretcher leveler. In this configuration, the roller leveler following the temper mill may be on-line. When the comparison indicates that the determined thickness is greater than the selected measurement criteria, the processing line may be configured such that the continuous length of sheet metal is directed from the uncoiling reel through the stretcher leveler to the stacking apparatus without passing through the temper mill. When the processing line includes a roller leveler, which is usually used in connection with temper mill processing, the roller leveler may be involved without involving the temper mill in the processing when the determined thickness of the sheet metal is less than or at the selected measurement criteria and when that material does not need to be extremely flat or stress relieved. When the determined thickness is greater than the selected measurement criteria, the continuous length of sheet metal may be directed from the uncoiling reel through the stretcher leveler to the stacking apparatus without passing through the temper mill and the roller leveler.

The processing line may also include a pit prior to the stretcher leveler. When the stretcher leveler is used, the continuous length of sheet metal may be directed from the uncoiling reel through the pit to the stretcher leveler and to the stacking apparatus without passing through the temper mill. When the determined thickness of the continuous length of sheet metal is at or below the selected measurement criteria, the continuous length of sheet metal may be directed from the uncoiling reel through the temper mill to the stacking apparatus with the take-up pit in the upward position and the stretcher leveler not on-line.

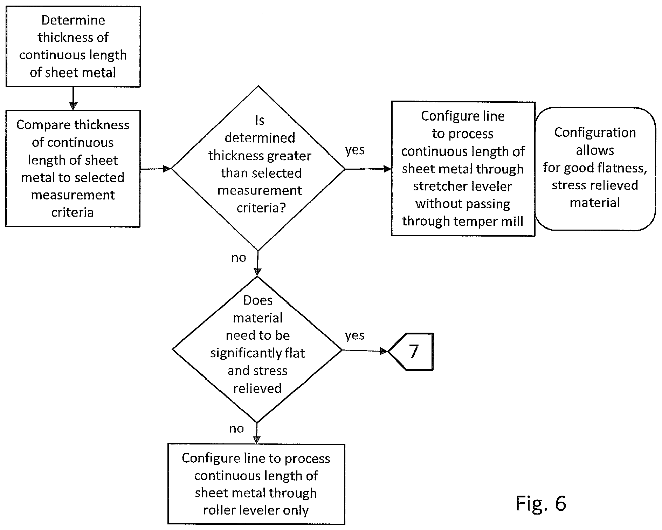

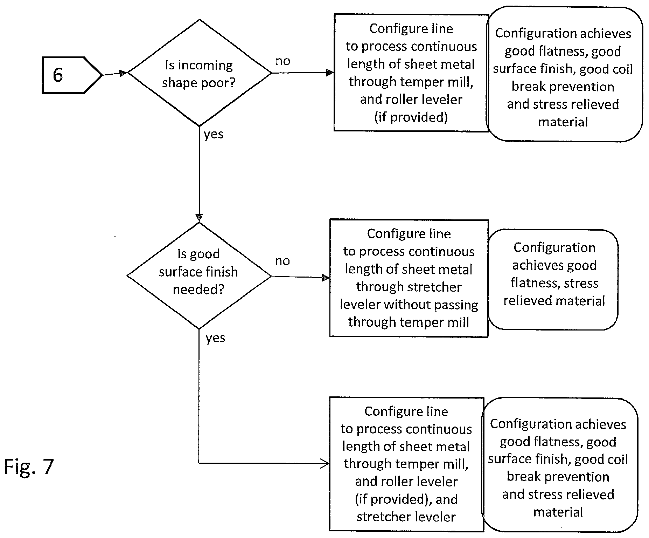

As shown in Figure 6, the configuration of the line may be in part based upon a determination of the thickness of the incoming material and a comparison of the thickness of the sheet metal to a selected measurement criteria. For instance, if the determined thickness is greater than the selected measurement criteria, the processing line may be configured to process continuous length of sheet metal through stretcher leveler without passing through temper mill. Such a configuration allows for generally good flatness, and stress relieved material. If, on the other hand, the determined thickness is less than or at the selected measurement criteria, the processing line may be configured based a determination of the shape of the incoming material, and requirements for stress relief, flatness, and/or surface finish requirements. By way of example and not in any limiting sense, if stress relief and significant flatness are not requirements, the line may configured to process the continuous length of sheet metal through roller leveler without passing through temper mill or stretcher leveler. If the material is required to be stress relieved and significantly flat, the material may be processed using other equipment on the line as described below and by example shown in Figure 7.

As shown in Figure 7, if the incoming material has generally good shape, i.e., no warp, crowning, bow, residual coil set, flatness, etc., the processing line may be configured to process the continuous length of sheet metal through temper mill without passing through stretcher leveler. This configuration can also be chosen to achieve good flatness, stress relieved material, good surface finish, and/or good coil break prevention. If, on the other hand, the incoming material shape, i.e., warp, crowning, bow, residual coil set, flatness, etc., is generally poor, the processing line may be configured depending upon a desired surface finish as shown in Figure 7.

Referring to Figure 7, if the material has no requirement for surface finish, the processing line may be configured to process continuous length of sheet metal through stretcher leveler without passing through temper mill. Such a configuration allows for generally good flatness, and stress relieved material. If, on the other hand, there is a requirement for good surface finish, the processing line may be configured to process the continuous length of sheet metal through temper mill, roller leveler (if provided), and the stretcher leveler. This configuration achieves good flatness, stress relieved material, good surface finish, and good coil break prevention.

As to the configuration of the processing line, the operator of the line may perform the steps of configuring the line based upon the operator's determination of the coil condition, material thickness, and ultimate material requirements in the manner described above. In the alternative, the operator of the line may receive instructions from another in selecting and configuring the processing line based upon coil condition, material thickness, and ultimate material requirements. For instance, an operator of the processing line may receive instructions to configure the line in connection with the installation of a temper mill in an existing stretcher leveler line. By way of example and not in any limiting sense, a temper mill may be retrofitted in an existing stretcher leveler line and the operator of the line may receive instructions for processing the continuous length of sheet metal in the line from an integrator, a provider of the temper mill, a process improvement consultant, or a retrofitting contractor. The operator may also receive instructions from a provider of a processing line comprising the stretcher leveler equipment and temper mill.

In view of the foregoing, it will be seen that the several advantages of the invention are achieved and attained. The embodiments were chosen and described in order to best explain the principles of the disclosure and their practical application to thereby enable others skilled in the art to best utilize the principles in various embodiments and with various modifications, within the scope of the invention as defined by the appended claims, as are suited to the particular use contemplated. As various modifications could be made in the constructions and methods herein described and illustrated without departing from the scope of the invention as defined in the appended claims, it is intended that all matter contained in the foregoing description or shown in the accompanying drawings shall be interpreted as illustrative. Thus, the breadth and scope of the present invention should not be limited by any of the above-described exemplary embodiments, but should be defined only in accordance with the scope of the following claims appended thereto.

## Claims

1. A method comprising:
in a cut-to-length steel coil processing line (10) having an un-coiling reel (14), a temper mill (18) a stretcher leveler (24), a shearer (26), and a stacking apparatus (28) arranged to sequentially process a continuous length of sheet metal, selecting one of first and second configurations for the processing line based upon a comparison of a thickness of the sheet metal and a selected measurement criteria, the first configuration comprising directing the continuous length of the sheet metal from the uncoiling reel (14) through the temper mill (18) to the stacking apparatus (28) without processing through the stretcher leveler (24) when a determined thickness of the continuous length of the sheet metal is at or below a selected measurement criteria; and the second configuration comprising directing the continuous length of the sheet metal from the uncoiling reel (14) through the stretcher leveler (24) to the stacking apparatus (28) without processing through the temper mill (18) when the determined thickness of the continuous length of the sheet metal is greater than the selected measurement criteria.

2. The method of claim 1 wherein the processing line (10) includes a roller leveler (20) following the temper mill (18); and the step of selection comprises:
as to the first configuration, selecting the continuous length of the sheet metal to be directed from the uncoiling reel (14) through the temper mill (18) and the roller leveler (20) to the stacking apparatus without processing through the stretcher leveler (24); and
as to the second, selecting the continuous length of the sheet metal to be directed from the uncoiling reel (14) through the stretcher leveler (24) to the stacking apparatus (28) without processing through the temper mill (18) and roller leveler (20).

3. The method of claim 1 wherein the processing line (10) includes a pit (22) prior to the stretcher leveler (24); and the step of selection comprises:
as to the first configuration, selecting the continuous length of the sheet metal to be directed from the uncoiling reel (14) through the temper mill (18) and roller leveler (20) to the stacking apparatus (28) without processing through the pit (22) and the stretcher leveler; and
as to the second configuration, selecting the continuous length of the sheet metal to be directed from the uncoiling reel through the pit (22) and the stretcher leveler (24) to the stacking apparatus without processing through the temper mill (18).

4. The method of claim 1 wherein the comparison step comprises comparing the determined thickness to the selected measurement criteria of a 9 standard gauge.

5. The method of claim 1 wherein the configuration step comprises a two high temper mill.

6. A cut-to-length steel coil processing line (10) having an un-coiling reel (14), a temper mill (18), a stretcher leveler (24), a shearer (26), and a stacking apparatus (28) arranged to sequentially process a continuous length of sheet metal, the processing line (10) being configurable in one of a first and second configuration, the first configuration comprising the continuous length of the sheet metal being directed from the uncoiling reel (14) through the temper mill (18) to the stacking apparatus (28) without processing through the stretcher leveler (24) when a determined thickness of the continuous length of sheet metal is at or below a selected measurement criteria, the second configuration comprising the continuous length of the sheet metal being directed from the uncoiling reel (14) through the stretcher leveler (24) to the stacking apparatus (28) without processing through the temper mill (18) when the determined thickness of the continuous length of sheet metal is greater than the selected measurement criteria.

7. The processing line of claim 6 further comprising a roller leveler (20) following the temper mill (18); wherein in the first configuration, the continuous length of the sheet metal is directed from the uncoiling reel (14) through the temper mill (18) and the roller leveler (20) to the stacking apparatus (28) without processing through the stretcher leveler (24); and wherein in the second configuration, the continuous length of the sheet metal is directed from the uncoiling reel (14) through the stretcher leveler (24) to the stacking apparatus (28) without processing through the temper mill (18) and roller leveler (24).

8. The processing line of claim 6 further comprising a pit (22) prior to the stretcher leveler (24); wherein in the first configuration, the continuous length of the sheet metal is directed from the uncoiling reel (14) through the temper mill (18) and roller leveler (20) to the stacking apparatus without processing through the pit (22) and the stretcher leveler (24); and wherein in the second configuration, the continuous length of the sheet metal is directed from the uncoiling reel (14) through the pit (22) and the stretcher leveler (24) to the stacking apparatus (28) without processing through the temper mill (18).

9. The processing line of claim 6 wherein, in operation, the selected measurement criteria is a 9 standard gauge.

10. The processing line of claim 6 wherein the temper mill (18) is a two high temper mill.

## Patentansprüche

1. Verfahren, das Folgendes aufweist:
in einer Verarbeitungsanlage zum Ablängen von Stahlband (10) Aufweisen von einer Abwickelhaspel (14), einem Dressiergerüst (18), einer Streckrichtanlage, einer Schermaschine (26) und einer Stapelvorrichtung (28), die zum sequentiellen Verarbeiten eines kontinuierlichen Blechbands angeordnet sind, Auswählen von einer von einer ersten und einer zweiten Konfiguration für die Verarbeitungsanlage auf Basis eines Vergleichs einer Dicke des Blechs und eines ausgewählten Maßkriteriums, wobei die erste Konfiguration das Lenken des kontinuierlichen Blechbands von der Abwickelhaspel (14) durch das Dressiergerüst (18) zur Stapelvorrichtung (28) ohne Verarbeiten durch die Streckrichtanlage (24) aufweist, wenn eine bestimmte Dicke des kontinuierlichen Blechbands auf oder unter einem ausgewählten Maßkriterium ist; und die zweite Konfiguration das Lenken des kontinuierlichen Blechbands von der Abwickelhaspel (14) durch die Streckrichtanlage (24) zur Stapelvorrichtung (28) ohne Verarbeiten durch das Dressiergerüst (18) aufweist, wenn die bestimmte Dicke des kontinuierlichen Blechbands größer als das ausgewählte Maßkriterium ist.

2. Verfahren nach Anspruch 1, wobei die Verarbeitungsanlage (10) eine Biegerichtanlage (20) nach dem Dressiergerüst (18) enthält und der Auswahlschritt Folgendes aufweist:
bezüglich der ersten Konfiguration Auswählen des von der Abwickelhaspel (14) durch das Dressiergerüst (18) und die Biegerichtanlage (20) zur Stapelvorrichtung ohne Verarbeiten durch die Streckrichtanlage (24) zu lenkenden kontinuierlichen Blechbands und
bezüglich der zweiten Auswählen des von der Abwickelhaspel (14) durch die Streckrichtanlage (24) zur Stapelvorrichtung (28) ohne Verarbeiten durch das Dressiergerüst (18) und die Biegerichtanlage (20) zu lenkenden kontinuierlichen Blechbands.

3. Verfahren nach Anspruch 1, wobei die Verarbeitungsanlage (10) eine Grube (22) vor der Streckrichtanlage (24) enthält und der Auswählschritt Folgendes aufweist:
bezüglich der ersten Konfiguration Auswählen des von der Abwickelhaspel (14) durch das Dressiergerüst (18) und die Biegerichtanlage (20) zur Stapelvorrichtung (28) ohne Verarbeiten durch die Grube (22) und die Streckrichtanlage zu lenkenden kontinuierlichen Blechbands und
bezüglich der zweiten Konfiguration Auswählen des von der Abwickelhaspel durch die Grube (22) und die Streckrichtanlage (24) zur Stapelvorrichtung ohne Verarbeiten durch das Dressiergerüst (18) zu lenkenden kontinuierlichen Blechbands.

4. Verfahren nach Anspruch 1, wobei der Vergleichsschritt das Vergleichen der bestimmten Dicke mit dem ausgewählten Maßkriterium einer Normallehre von 9 aufweist.

5. Verfahren nach Anspruch 1, wobei der Konfigurationsschritt ein Tandem-Dressiergerüst aufweist.

6. Verarbeitungsanlage zum Ablängen von Stahlband (10) mit einer Abwickelhaspel (14), einem Dressiergerüst (18), einer Streckrichtanlage (24), einer Schermaschine (26) und einer Stapelvorrichtung (28), die zum sequentiellen Verarbeiten eines kontinuierlichen Blechbands angeordnet ist, wobei die Verarbeitungsanlage (10) in einer von einer ersten oder einer zweiten Konfiguration konfigurierbar ist, wobei die erste Konfiguration das Lenken des kontinuierlichen Blechbands von der Abwickelhaspel (14) durch das Dressiergerüst (18) zur Stapelvorrichtung (28) ohne Verarbeiten durch die Streckrichtanlage (24) aufweist, wenn eine bestimmte Dicke des kontinuierlichen Blechbands auf oder unter einem ausgewählten Maßkriterium ist, die zweite Konfiguration das Lenken des kontinuierlichen Blechbands von der Abwickelhaspel (14) durch die Streckrichtanlage (24) zur Stapelvorrichtung (28) ohne Verarbeiten durch das Dressiergerüst (18) aufweist, wenn die bestimmte Dicke des kontinuierlichen Blechbands größer als das ausgewählte Maßkriterium ist.

7. Verarbeitungsanlage nach Anspruch 6, die ferner eine Biegerichtanlage (20) nach dem Dressiergerüst (18) aufweist;
wobei in der ersten Konfiguration das kontinuierliche Blechband von der Abwickelhaspel (14) durch das Dressiergerüst (18) und die Biegerichtanlage (20) zur Stapelvorrichtung ohne Verarbeiten durch die Streckrichtanlage (24) gelenkt wird und wobei in der zweiten Konfiguration das kontinuierliche Blechband von der Abwickelhaspel (14) durch die Streckrichtanlage (24) zur Stapelvorrichtung (28) ohne Verarbeiten durch das Dressiergerüst (18) und die Biegerichtanlage (24) gelenkt wird.

8. Verarbeitungsanlage nach Anspruch 6, die ferner eine Grube (22) vor der Streckrichtanlage (24) aufweist;
wobei in der ersten Konfiguration das kontinuierliche Blechband von der Abwickelhaspel (14) durch das Dressiergerüst (18) und die Biegerichtanlage (20) zur Stapelvorrichtung ohne Verarbeiten durch die Grube (22) und die Streckrichtanlage (24) gelenkt wird und
wobei in der zweiten Konfiguration das kontinuierliche Blechband von der Abwickelhaspel (14) durch die Grube (22) und die Streckrichtanlage (24) zur Stapelvorrichtung (28) ohne Verarbeiten durch das Dressiergerüst (18) gelenkt wird.

9. Verarbeitungsanlage nach Anspruch 6, wobei das ausgewählte Maßkriterium eine Normallehre von 9 ist.

10. Verarbeitungsanlage nach Anspruch 6, wobei das Dressiergerüst (18) ein Tandem-Dressiergerüst ist.

## Revendications

1. Procédé comprenant :
dans une ligne de découpe à longueur d'acier en bobines (10) ayant une bobine de déroulement (14), un train d'écrouissage (18), un banc d'étirage et de planage (24), un cisailleur (26) et un appareil d'empilage (28) aménagés pour découper de manière séquentielle une longueur continue de tôle, sélectionner l'une parmi une première et une deuxième configuration pour la ligne de découpe en se basant sur une comparaison d'une épaisseur de la tôle et d'un critère de mesure sélectionné, la première configuration comprenant l'étape consistant à diriger la longueur continue de la tôle depuis la bobine de déroulement (14) au travers du train d'écrouissage (18) jusqu'à l'appareil d'empilage (28) sans découpe au travers du banc d'étirage et de planage (24) lorsqu'une épaisseur déterminée de la longueur continue de la tôle est égale ou inférieure à un critère de mesure sélectionné ; et la deuxième configuration comprend l'étape consistant à diriger la longueur de la tôle depuis la bobine de déroulement (14) au travers du banc d'étirage et de planage (24) jusqu'à l'appareil d'empilage (28) sans découpe au travers du train d'écrouissage (18) lorsque l'épaisseur déterminée de la longueur continue de la tôle est supérieure au critère de mesure sélectionné.

2. Procédé selon la revendication 1 dans lequel la ligne de découpe (10) comprend une dresseuse à rouleaux (20) positionnée après le train d'écrouissage (18) ;
et l'étape de sélection comprend les étapes consistant à :
en ce qui concerne la première configuration, sélectionner la longueur continue de la tôle appelée à être dirigée depuis la bobine de déroulement (14) au travers du train d'écrouissage (18) et de la dresseuse à rouleaux (20) jusqu'à l'appareil d'empilage sans découpe au travers du banc d'étirage et de planage (24) ; et
en ce qui concerne la deuxième configuration, sélectionner la longueur continue de la tôle appelée à être dirigée depuis la bobine de déroulement (14) au travers du train d'étirage et de planage (24) jusqu'à l'appareil d'empilage (28) sans découpe au travers du train d'écrouissage (18) et de la dresseuse à rouleaux (20).

3. Procédé selon la revendication 1 dans lequel la ligne de découpe (10) est dotée d'une fosse (22) positionnée avant le banc d'étirage et de planage (24), et l'étape de sélection comprend les étapes consistant à :
en ce qui concerne la première configuration, sélectionner la longueur continue de la tôle appelée à être dirigée depuis la bobine de déroulement (14) au travers du train d'écrouissage (18) et de la dresseuse à rouleaux (20) jusqu'à l'appareil d'empilage (28) sans découpe au travers de la fosse (22) et du banc d'étirage et de planage ; et
en ce qui concerne la deuxième configuration, sélectionner la longueur continue de la tôle appelée à être dirigée depuis la bobine de déroulement au travers de la fosse (22) et du banc d'étirage et de planage (24) jusqu'à l'appareil d'empilage sans découpe au travers du train d'écrouissage (18).

4. Procédé selon la revendication 1 dans lequel l'étape de comparaison comprend la comparaison de l'épaisseur déterminée au critère de mesure sélectionné d'un gabarit standard de 9.

5. Procédé selon la revendication 1 dans lequel l'étape de configuration comprend un train d'écrouissage à deux rouleaux.

6. Ligne de découpe à longueur d'acier en bobines (10) ayant une bobine de déroulement (14), un train d'écrouissage (18), un banc d'étirage et de planage (24), un cisailleur (26) et un appareil d'empilage (28) aménagés pour découper de manière séquentielle une longueur continue de tôle, la ligne de découpe (10) étant configurable en l'une parmi une première et une deuxième configuration, la première configuration comprenant la longueur continue de la tôle dirigée depuis la bobine de déroulement (14) au travers du train d'écrouissage (18) jusqu'à l'appareil d'empilage (28) sans découpe au travers du banc d'étirage et de planage (24) lorsqu'une épaisseur déterminée de la longueur continue de tôle est égale ou inférieure à un critère de mesure sélectionné, la deuxième configuration comprenant la longueur continue de la tôle dirigée depuis la bobine de déroulement (14) au travers du banc d'étirage et de planage (24) jusqu'à l'appareil d'empilage (28) sans découpe au travers du train d'écrouissage (18) lorsque l'épaisseur déterminée de la longueur continue de tôle est supérieure au critère de mesure sélectionné.

7. Ligne de découpe selon la revendication 6 comprenant en outre une dresseuse à rouleaux (20) positionnée après le train d'écrouissage (18) ;
dans laquelle dans la première configuration, la longueur continue de la tôle est dirigée depuis la bobine de déroulement (14) au travers du train d'écrouissage (18) et de la dresseuse à rouleaux (20) jusqu'à l'appareil d'empilage (28) sans découpe au travers du banc d'étirage et de planage (24) ; et
dans laquelle dans la deuxième configuration, la longueur continue de la tôle est dirigée depuis la bobine de déroulement (14) au travers du banc d'étirage et de planage (24) jusqu'à l'appareil d'empilage (28) sans découpe au travers du train d'écrouissage (18) et du banc d'étirage et de planage (24).

8. Ligne de découpe selon la revendication 6 comprenant en outre une fosse (22) disposée avant le banc d'étirage et de planage (24) ;
dans laquelle dans la première configuration, la longueur continue de la tôle est dirigée depuis la bobine de déroulement (14) au travers du train d'écrouissage (18) et de la dresseuse à rouleaux (20) jusqu'à l'appareil d'empilage sans découpe au travers de la fosse (22) et du banc d'étirage et de planage (24) ; et
dans laquelle dans la deuxième configuration, la longueur continue de la tôle est dirigée depuis la bobine de déroulement (14) au travers de la fosse (22) et du banc d'étirage et de planage (24) jusqu'à l'appareil d'empilage (28) sans découpe au travers du train d'écrouissage (18)

9. Ligne de découpe selon la revendication 6 dans laquelle, en cours de fonctionnement, le critère de mesure sélectionné est un gabarit standard de 9.

10. Ligne de découpe selon la revendication 6 dans laquelle le train d'écrouissage est un train d'écrouissage à deux rouleaux.
